(19) Europäisches Patentamt
European Patent Office
Office européen des brevets

(11) EP 3 978 564 B1

(12) **EUROPEAN PATENT SPECIFICATION**

(45) Date of publication and mention of the grant of the patent:
**29.04.2026 Bulletin 2026/18**

(21) Application number: **21738506.1**

(22) Date of filing: **06.01.2021**

(51) International Patent Classification (IPC):
***C08L 15/00*** *(2006.01)* ***H01M 4/62*** *(2006.01)*
***H01M 4/13*** *(2010.01)* ***H01M 10/052*** *(2010.01)*
***C08J 3/09*** *(2006.01)* ***H01B 1/20*** *(2006.01)*
***H01M 4/02*** *(2006.01)*

(52) Cooperative Patent Classification (CPC):
**H01B 1/24; C08C 19/02; C08F 236/12; C08L 15/00; H01M 4/0404; H01M 10/0525;** Y02E 60/10

(86) International application number:
**PCT/KR2021/000119**

(87) International publication number:
**WO 2021/141376 (15.07.2021 Gazette 2021/28)**

(54) **PRE-DISPERSANT COMPOSITION, AND ELECTRODE AND SECONDARY BATTERY WHICH INCLUDE THE SAME**

VORVERTEILUNGSZUSAMMENSETZUNG UND ELEKTRODE UND SEKUNDÄRBATTERIE, DIE DIESE ENTHALTEN

COMPOSITION PRE-DISPERSANTE, ET ELECTRODE ET BATTERIE SECONDAIRE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2020 KR 20200002194**
**05.01.2021 KR 20210001106**

(43) Date of publication of application:
**06.04.2022 Bulletin 2022/14**

(73) Proprietor: **LG Chem, Ltd.**
**Seoul 07336 (KR)**

(72) Inventors:
- **WOO, Jung Eun**
  **Daejeon 34122 (KR)**
- **RYU, Dong Jo**
  **Daejeon 34122 (KR)**
- **HAN, Seon Hee**
  **Daejeon 34122 (KR)**
- **HAN, Jung Sup**
  **Daejeon 34122 (KR)**
- **SON, Jeong Man**
  **Daejeon 34122 (KR)**
- **KANG, Min Ah**
  **Daejeon 34122 (KR)**
- **CHOI, Cheol Hoon**
  **Daejeon 34122 (KR)**
- **LEE, Sung Jin**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 3 506 398** **KR-A- 20150 016 852**
**KR-A- 20170 085 976** **KR-A- 20180 020 451**
**KR-A- 20180 107 759** **US-A1- 2019 165 366**

- **DATABASE WPI Week 201953, Derwent World Patents Index; AN 2019-461146, XP002807278**
- **DATABASE WPI Week 201868, Derwent World Patents Index; AN 2018-75507X, XP002807279**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 978 564 B1

## Description

## TECHNICAL FIELD

### Technical Field

The present invention relates to a pre-dispersant composition having excellent dispersibility, and an electrode and a secondary battery which include the pre-dispersant composition.

## BACKGROUND ART

Demand for secondary batteries suitable as an energy source has been rapidly increased as personal IT devices and computer networks are developed with the development of information society and the accompanying dependency of society as a whole on electrical energy is increased. Among these secondary batteries, lithium secondary batteries having high energy density, high voltage, long cycle life, and low self-discharging rate have been commercialized and widely used.

Research to use an electrode for a lithium secondary battery, in which energy density per unit volume is relatively improved by improving electrode density, has been actively conducted as technology development and demand with respect to mobile devices have increased.

With respect to a conventional electrode for a lithium secondary battery, since it is formed by molding electrode active material particles having a diameter of a few μm to a few tens of μm with a high-pressure press, electrolyte solution permeability decreases as the particles are deformed or a space between the particles decreases during a preparation process, and, accordingly, there is a disadvantage in that conductivity is reduced.

In order to address such a limitation, a method of using a conductive agent having excellent electrical conductivity and strength during the preparation of the electrode has been proposed.

In a case in which the conductive agent is used, since the conductive agent is dispersed between the pressed electrode active material particles to maintain micropores between the active material particles, penetration of the electrolyte solution is easy and resistance in the electrode is reduced due to the excellent conductivity of the conductive agent, and thus, the conductivity may be improved.

However, the conductive agent is disadvantageous in that it deteriorates coatability of an electrode slurry as it is not uniformly dissolved in an electrode slurry composition or it is agglomerated while not having a stable dispersion state in the electrode slurry composition due to strong van der Waals attraction therebetween. Thus, despite its usefulness, the conductive agent has limitations in its use due to its low solubility and dispersibility.

In order to address these disadvantages, a method of improving dispersion stability of the conductive agent by using various dispersants has been proposed. However, it is difficult to secure sufficient dispersibility of the conductive agent even by this method, or the dispersibility is secured, but another problem, in which battery characteristics are degraded due to modification of the dispersant during long-term storage, is being caused.

Thus, there is a need to develop a method which may improve the dispersibility of the conductive agent in the electrode.

KR 20150016852 A discloses a carbon nanotube dispersion comprising hydrogenated nitrile rubber and N-methylpyrrolidone.

KR 20170085976 A discloses a coating paste having a viscosity enabling easy coating, the water content is controlled so as to be less than 0.7 mass-% relative to the total amount of the coating paste.

## DISCLOSURE OF THE INVENTION

## TECHNICAL PROBLEM

An aspect of the present invention provides a pre-dispersant composition which may improve dispersiblity of a conductive agent.

Another aspect of the present invention provides an electrode slurry composition in which processability, such as coating uniformity, is improved by including the pre-dispersant composition.

Another aspect of the present invention provides an electrode prepared by using the electrode slurry composition and a lithium secondary battery including the electrode.

## TECHNICAL SOLUTION

According to an aspect of the present invention,

there is provided a pre-dispersant composition including a hydrogenated nitrile-butadiene rubber, an amide-b ased dispersion medium, and a metallic element or a semi-metallic element,
wherein viscosity (Brookfield viscometer, 25°C) of the pre-dispersant composition is in a range of 70 cPs to 3,000 cPs, and a moisture content of the pre-dispersant composition is 0.9 wt% or less, wherein a solid content in the pre-dispersant composition is in a range of 4 wt% to 11 wt% based on a total weight of the pre-dispersant composition, wherein the metallic element or semi-metallic element is at least one selected from aluminum (Al), calcium (Ca), and silicon (Si), wherein the metallic element or the semi-metallic element has a concentration of 150 ppm or less.

According to another aspect of the present invention, there is provided an electrode slurry composition including an electrode active material, a conductive agent, a binder, a solvent, and the pre-dispersant composition of the present invention.

According to another aspect of the present invention, there is provided an electrode for a secondary battery which is prepared by using the electrode slurry composition and a lithium secondary battery including the same.

Further embodiments are disclosed in the dependent claims.

## ADVANTAGEOUS EFFECTS

A pre-dispersant composition containing a hydrogenated nitrile-butadiene rubber of the present invention may effectively improve dispersibility of a conductive agent in an electrode slurry composition by controlling viscosity and a moisture content within a specific range. If the pre-dispersant composition of the present invention is used, an electrode slurry composition having improved processability, such as coatability, may be provided by uniformly dispersing the conductive agent between active material particles.

Also, if the electrode slurry composition of the present invention is used, penetration of an electrolyte solution is easy, and excellent conductivity of the conductive agent may be secured to prepare an electrode with reduced resistance. Thus, a lithium secondary battery having improved cycle characteristics may be achieved.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Unless otherwise specified in the present invention, the expression "*" denotes the same or different atom or a portion connected between ends of a formula.

Also, the expression "nitrile rubber" or "NBR" used in the present specification means a rubber as a copolymer (polymer) containing repeating units derived from one or more conjugated diene compounds and at least one $\alpha,\beta$-unsaturated nitrile compound unless otherwise specified.

Viscosity of a pre-dispersant composition in the present specification may be measured with a Brookfield viscometer (DV2T (LV or RV), manufacturer: Brookfield) at a speed of 60 rpm using a No. 63 spindle at 25°C (if the measurement is not possible under the above conditions, the viscosity may be measured at a speed of 10 rpm using a No. 27 spindle).

Shear viscosity of a positive electrode slurry composition in the present specification was measured at a shear rate of 2.5/s using a rheometer (AR series, manufacturer: TA instruments).

Also, a moisture content of the pre-dispersant composition containing a hydrogenated nitrile-butadiene rubber in the present invention may be measured by a Karl Fischer method. For example, titration is performed after injecting a weighed sample into a Karl Fischer titrator (899 Coulometer, manufacturer: Metrohm), wherein the moisture content may be calculated by an amount of Karl Fischer reagent consumed in this case.

Furthermore, a content of a metallic element or semi-metallic element in the pre-dispersant composition containing a hydrogenated nitrile-butadiene rubber in the present specification may be measured using an inductively coupled plasma optical emission spectrometer (Optima 5300DV, manufacturer: PerkinElmer). Specifically, referring to US EPA method 3052, after a sample is burnt at high temperature, a residue from which an organic material has been removed is dissolved in an acid solution, and each metal ion may then be detected and quantified from the acid solution.

Also, amounts of a repeating unit of a hydrogenated conjugated diene-derived structure and a nitrile or acrylonitrile-derived repeating unit in the hydrogenated nitrile-butadiene rubber in the present specification may be measured using Fourier transform infrared spectroscopy and Dumas method. Specifically, a sum of the amount of the

repeating unit of the hydrogenated conjugated diene-derived structure and an amount of a non-hydrogenated conjugated diene repeating unit is a value obtained by subtracting the amount of the nitrile or acrylonitrile-derived repeating unit from a total sum of monomers of the hydrogenated nitrile-butadiene rubber, wherein analysis of the amount of the nitrile or acrylonitrile-derived repeating unit follows ISO 24698-1. Furthermore, the repeating unit of the hydrogenated conjugated diene-derived structure may be measured with an infrared spectrometer (Cary660, manufacturer: Agilent) and calculated from an absorption peak of a carbon-carbon double bond derived from a conjugated diene.

Furthermore, a weight-average molecular weight (Mw) of the hydrogenated nitrile-butadiene rubber in the present specification may be measured by gel permeation chromatography. Specifically, a sample is dissolved in tetrahydrofuran and then analyzed by injecting the solution at a rate of 1 mL/min into a gel permeation chromatograph-refractive index detector (1260 Infinity II, manufacturer: Agilent), and a molecular weight of a polymer separated according to a dissolution rate for a column may be calculated using a polystyrene standard sample.

Recently, in a case in which a hydrogenated nitrile-based rubber is used as a pre-dispersant of a conductive agent, it has been proven that dispersibility of the conductive agent may be increased to reduce battery resistance and, simultaneously, an improvement in battery characteristics may be expected. However, the dispersibility of the conductive agent varies depending on viscosity, a solid content, or a moisture content of a pre-dispersant composition containing a hydrogenated nitrile-based rubber, and, accordingly, there is a disadvantage in that processability of an electrode slurry composition is reduced or deteriorated.

Thus, the present invention aims at providing a pre-dispersant composition, which may improve the dispersibility of the conductive agent by controlling the viscosity, the solid content, the moisture content, and, furthermore, the amount of the metallic element or semi-metallic element of the pre-dispersion composition containing a hydrogenated nitrile-based rubber within specific ranges, and an electrode slurry composition in which processability, such as coatability, is improved by including the same. Also, the present invention aims at providing a lithium secondary battery in which cycle characteristics are improved by using the electrode slurry composition.

## Pre-dispersant Composition

First, a pre-dispersant composition according to the present invention will be described.

The pre-dispersant composition according to the present invention includes:

(1) a hydrogenated nitrile-butadiene rubber (HNBR), (2) an amide-based dispersion medium, and a metallic element or a semi-metallic element,

wherein viscosity (Brookfield viscometer, 25°C) is in a range of 70 cPs to 3,000 cPs, and

a moisture content is 0.9 wt% or less, wherein a solid content in the pre-dispersant composition is in a range of 4 wt% to 11 wt% based on a total weight of the pre-dispersant composition, wherein the metallic element or semi-metallic element is at least one selected from aluminum (Al), calcium (Ca), and silicon (Si), wherein the metallic element or the semi-metallic element has a concentration of 150 ppm or less.

Hereinafter, each component of the pre-dispersant composition of the present invention will be described in more detail.

### (1) Hydrogenated Nitrile-Butadiene Rubber

The hydrogenated nitrile-butadiene rubber in the present invention may include:

a repeating unit of an acrylonitrile-derived structure represented by the following Formula 1; and

a repeating unit including at least one of repeating units of hydrogenated butadiene-derived structures represented by the following Formulae 2 and 3.

[Formula 1]

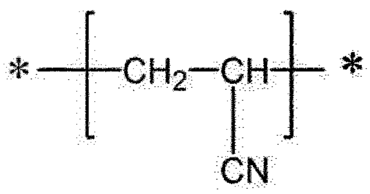

[Formula 2]

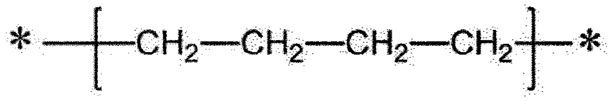

[Formula 3]

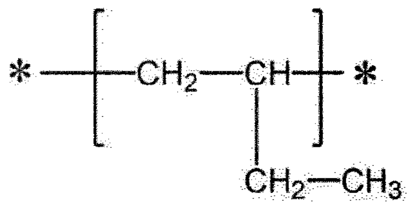

The hydrogenated nitrile-butadiene rubber may be prepared by emulsion polymerization. Specifically, after a conjugated diene-based compound, such as a 1,3-butadiene compound, and one type of $\alpha,\beta$-unsaturated nitrile compound, for example, acrylonitrile, are added to water to emulsify, a free radical-generating catalyst is added, a mixture is stirred while maintaining a constant temperature, and a nitrile-butadiene rubber is obtained in such a manner that a reaction terminator and a stabilizer are added to a reaction system to terminate a polymerization reaction when a desired degree of polymerization is reached.

Then, a hydrogenated nitrile-butadiene rubber may be prepared by performing a hydrogenation reaction, in which a part of double bonds contained in a molecular structure of the nitrile-butadiene rubber (NBR), for example, double bonds of repeating units of butadiene-derived structures represented by the following Formula 4 or Formula 5, is changed to a single bond, on the above-obtained nitrile-butadiene rubber in the presence of a hydrogenation catalyst (See article [Macromolecules, 1987, 20, 2362 N.A. Mohammadi and G.L. Rempel]).

[Formula 4]

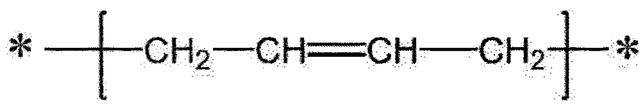

[Formula 5]

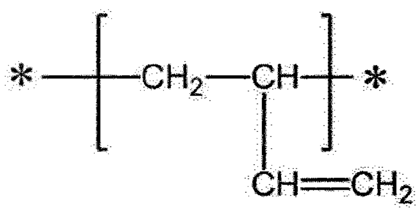

A weight ratio of the repeating unit of the acrylonitrile-derived structure represented by Formula 1 : the repeating unit including at least one of the repeating units of the hydrogenated butadiene (HBD)-derived structures represented by Formulae 2 and 3 in the hydrogenated nitrile-butadiene rubber may be in a range of 10:90 to 50:50, particularly 20:80 to 45:55, and more particularly 25:75 to 40:60.

In a case in which the repeating unit of the acrylonitrile-derived structure represented by Formula 1 and the repeating unit including at least one of the repeating units of the hydrogenated butadiene (HBD)-derived structures represented by Formulae 2 and 3 satisfy the above mixing range, since solubility of the hydrogenated nitrile-butadiene rubber in the dispersion medium may be secured, the dispersibility of the conductive agent in the electrode slurry composition may be improved.

If the dispersibility of the conductive agent is improved, conductivity may be secured in the electrode slurry composition even if an amount of the conductive agent is reduced. Thus, if the electrode slurry composition of the present

invention is used, excellent conductivity may be secured and, simultaneously, an electrode, in which penetration of an electrolyte solution is easy, resistance is reduced, and a side reaction with the electrolyte solution is reduced, may be prepared. Therefore, a lithium secondary battery having improved cycle characteristics may be achieved.

The solubility in the electrolyte solution increases as the amount of the repeating unit of the acrylonitrile-derived structure represented by Formula 1 in the hydrogenated nitrile-butadiene rubber structure is increased, and, accordingly, battery performance may be degraded. Thus, the amount of the repeating unit of the acrylonitrile-derived structure represented by Formula 1 in the hydrogenated nitrile-butadiene rubber may be 50 wt% or less, particularly 45 wt% or less, and preferably 40 wt%.

A content ratio of the repeating unit of the acrylonitrile-derived structure represented by Formula 1 to the repeating unit including at least one of the repeating units of the hydrogenated butadiene (HBD)-derived structures represented by Formula 2 and Formula 3 may be measured and calculated by Fourier transform infrared spectroscopy and Dumas method. Specifically, a sum of an amount of a repeating unit of a hydrogenated conjugated diene-derived structure and an amount of a non-hydrogenated conjugated diene repeating unit is a value obtained by subtracting an amount of a nitrile or acrylonitrile-derived repeating unit from a total sum of monomers of the hydrogenated nitrile-butadiene rubber, wherein analysis of the amount of the nitrile or acrylonitrile-derived repeating unit follows ISO 24698-1. Furthermore, the repeating unit of the hydrogenated conjugated diene-derived structure may be measured with an infrared spectrometer (Cary660, manufacturer: Agilent) and calculated from an absorption peak of a carbon-carbon double bond derived from a conjugated diene.

A small amount of at least one repeating unit of the repeating units of the butadiene-derived structures represented by Formula 4 or Formula 5, which are unreacted during the hydrogenation, may remain in the molecular structure of the hydrogenated nitrile-butadiene rubber of the present invention.

In this case, the repeating unit of the butadiene-derived structure represented by Formula 4 or Formula 5 may be included in an amount of 1 wt% or less, particularly 0.99 wt% or less, and most preferably 0.95 wt% or less based on a total weight of the hydrogenated nitrile-butadiene rubber.

Since the repeating unit of the butadiene-derived structure represented by Formula 4 or Formula 5 is included in an amount of 1 wt% or less, gel formation due to heat and/or shear force in a preparation process of the pre-dispersant composition or electrode slurry composition including the same may be suppressed to prevent an increase in viscosity. Thus, safety may be secured by increasing dispersibility of the hydrogenated nitrile-butadiene rubber. If, in a case in which the repeating unit of the butadiene-derived structure represented by Formula 4 or Formula 5 remains in an amount of greater than 1 wt%, since the double bonds contained in the repeating unit of the butadiene-derived structure represented by Formula 4 or Formula 5 induce gel formation while forming crosslinks, viscosity may be increased. Accordingly, a filter clogging phenomenon may occur during filtering after the preparation of the pre-dispersant composition, or a change in the viscosity may occur to reduce workability. In addition, in a case in which crosslinking is caused by shear and heat thus retained during the subsequent preparation of the electrode slurry composition, the viscosity of the electrode slurry composition may be increased to deteriorate coatability.

A weight-average molecular weight (Mw) of the hydrogenated nitrile-butadiene rubber may be in a range of 50,000 g/mol to 700,000 g/mol, particularly 70,000 g/mol to 600,000 g/mol, preferably 80,000 g/mol to 400,000 g/mol, and more particularly 100,000 g/mol to 400,000 g/mol.

If the weight-average molecular weight of the hydrogenated nitrile-butadiene rubber is less than 50,000 g/mol, since the viscosity of the pre-dispersant composition decreases and flowability of the electrode slurry composition increases due to the influence thereof, it may be difficult to achieve a designed coating thickness of an electrode active material. Also, if the weight-average molecular weight of the hydrogenated nitrile-butadiene rubber is greater than 700,000 g/mol, since the viscosity of the prepared pre-dispersant composition increases excessively, it may not be easy to measure it.

The weight-average molecular weight (Mw) of the hydrogenated nitrile-butadiene rubber may be measured by gel permeation chromatography. For example, a sample is dissolved in tetrahydrofuran and then analyzed by injecting the solution into a gel permeation chromatograph-refractive index detector (1260 Infinity II, manufacturer: Agilent), and a molecular weight of a polymer separated according to a dissolution rate for a column may be calculated using a polystyrene standard sample.

**(2) Amide-based Dispersion Medium**

Also, the pre-dispersant composition according to the present invention may include an amide - based dispersion medium.

The amide - based dispersion medium is a component included in consideration of an effect of improving the solubility and dispersibility of the hydrogenated nitrile-butadiene rubber in the electrode slurry composition, wherein it is desirable to use a material which allows lithium ions to move freely and has a low reactivity with the electrode slurry composition to be described later.

As a representative example, the amide - **based** dispersion medium may include at least one polar solvent selected from the group consisting of dimethylformamide (DMF), diethylformamide, dimethylacetamide (DMAc), and N-methylpyrrolidone (NMP).

The amide-based dispersion medium may be used so that a solid content, for example, the amount of the hydrogenated nitrile-butadiene rubber in the pre-dispersant composition is in a range of 4 wt% to 11 wt%, preferably 5 wt% to 11 wt%, and more preferably 6 wt% to 11 wt% based on a total weight of the pre-dispersant composition.

In a case in which the amount of the hydrogenated nitrile-butadiene rubber, as the solid content, is included within the above range, since the viscosities of the pre-dispersant composition and the electrode slurry composition including the same may be controlled, the coatability of the electrode slurry composition may be improved.

Also, the viscosity of the pre-dispersant composition of the present invention is in a range of 70 cPs to 3,000 cPs, and the pre-dispersant composition may preferably have a viscosity (Brookfield viscometer, 25°C) of 200 cPs to 3,000 cPs, for example, 210 cPs to 1,600 cPs.

In a case in which the viscosity of the pre-dispersant composition satisfies the above range, since the viscosity of the electrode slurry composition to be described later may be controlled to be 40,000 cPs or less, the processability, such as coatability, of the electrode slurry composition may be improved. If, in a case in which the viscosity of the pre-dispersant composition is greater than 3,000 cPs, since the viscosity is excessively increased, it is not possible to measure the pre-dispersant composition, and thus, the preparation of the electrode may not be possible.

The viscosity of the pre-dispersant composition may be measured using a Brookfield viscometer (DV2T (LV or RV), manufacturer: Brookfield). In this case, the viscosity may be measured at a speed of 60 rpm using a No. 63 spindle at 25°C.

In a case in which a hydrogenated nitrile-butadiene rubber having a weight-average molecular weight of greater than 700,000 g/mol is used, but is used in an amount of less than 4 wt% in the pre-dispersant composition, the viscosity of the pre-dispersant composition may be controlled to be in a range of 70 cPs to 3,000 cPs, but the dispersibility of the conductive agent may be reduced as the amount of the hydrogenated nitrile-butadiene rubber included in the electrode slurry composition decreases.

A moisture content in the pre-dispersant composition of the present invention is 0.9 wt% or less, for example, 0.3 wt% or less.

Since the moisture content of the pre-dispersant composition of the present invention is controlled to be 0.9 wt% or less, for example, 0.3 wt% or less, a reaction between the electrode active material and moisture may be minimized when coating the electrode slurry composition to be described later, and thus, degradation of the cycle characteristics may be suppressed.

The moisture content may be measured for the pre-dispersant composition, in which the hydrogenated nitrile-butadiene rubber subjected to a hydrogenation reaction is dissolved in the amide-based dispersion medium, using a Karl Fischer method. For example, titration is performed after injecting a weighed sample into a Karl Fischer titrator (899 Coulometer, manufacturer: Metrohm), wherein the moisture content may be calculated by an amount of Karl Fischer reagent consumed in this case.

A metallic element or semi-metallic element is included in the pre-dispersant composition containing the hydrogenated nitrile-butadiene rubber of the present invention.

The metallic element or semi-metallic element is a component derived from a coagulant, an antifoaming agent, or an anti-blocking agent, which is added during the preparation of a rubber by emulsion polymerization or the preparation of a hydrogenated nitrile-butadiene rubber through a hydrogenation reaction, wherein it may not be partially removed after the polymerization or hydrogenation reaction, but may remain in the hydrogenated nitrile-butadiene rubber.

Since the metallic element or semi-metallic element is included in a concentration of 150 ppm or less, it may prevent exfoliation of the electrode or precipitation of a metal complex, may maximize the dispersibility and conductivity of the conductive agent, and may minimize a side reaction caused by the metallic element or semi-metallic element, and thus, the cycle characteristics may be improved.

Specifically, the metallic element or semi-metallic element is at least one selected from aluminum (Al) element, a calcium (Ca) element, or a silicon (Si) element, and it is desirable that the aluminum (Al) element is included in a concentration of 100 ppm or less, the calcium (Ca) element is included in a concentration of 60 ppm or less, for example, 30 ppm or less, and the silicon (Si) element is included in a concentration of 30 ppm or less.

A content of the metallic element or semi-metallic element may be measured using an inductively coupled plasma optical emission spectrometer (Optima 5300DV, manufacturer: PerkinElmer). Specifically, after a sample is burnt at high temperature, a residue from which an organic material has been removed is dissolved in an acid solution, and each metal ion may then be detected and quantified from the acid solution.

## Method of Preparing Pre-dispersant Composition

The pre-dispersant composition of the present invention may be prepared by performing the steps of:

(A) preparing a solid-state hydrogenated nitrile-butadiene rubber with a controlled moisture content;
(B) chopping the solid-state hydrogenated nitrile-butadiene rubber; and
(C) mixing the solid-state hydrogenated nitrile-butadiene rubber and an amide-based dispersion medium.

Specifically, in the step (A) of preparing a solid-state hydrogenated nitrile-butadiene rubber, a hydrogenated nitrile-butadiene rubber may be stripped at a high temperature of 80°C to 110°C, and a drying process may be performed at the same temperature for 11 hours to 24 hours.

During the stripping and the drying process, a coagulant, such as aluminum sulfate, and a release agent, such as calcium stearate and talc, may be additionally included. The coagulant and the release agent each may be used in an amount of about 0.01 part by weight to about 4 parts by weight based on 100 parts by weight of the hydrogenated nitrile-butadiene rubber.

Then, before mixing the solid-state hydrogenated nitrile-butadiene rubber and the amide - **based** dispersion medium, it is desirable to (B) chop or grind the solid-state hydrogenated nitrile-butadiene rubber to a weight of 2 g or less in order to increase the solubility of the solid-state hydrogenated nitrile-butadiene rubber.

In this case, since a contact area with the dispersion medium is not sufficiently large if the weight of the hydrogenated nitrile-butadiene rubber chopped is greater than 2 g, dissolution time is increased and gel formation is promoted to deteriorate the processability of the pre-dispersant composition.

Subsequently, (C) the solid-state hydrogenated nitrile-butadiene rubber chopped and the amide - **based** dispersion medium may be mixed under a temperature condition of 60°C to 130°C, particularly 80°C to 130°C, and more particularly 100°C to 130°C for 5 hours to 24 hours.

In a case in which the mixing process temperature and time are outside the above ranges, since moisture removal is not easy or gel formation is promoted, the processability of the pre-dispersant composition and the electrode slurry composition including the same is deteriorated, and thus, the cycle characteristics of the secondary battery may be degraded.

A known antioxidant, such as butylated hydroxytoluene (BHT), may be further included during the mixing process. The antioxidant may be used in an amount of about 0.05 part by weight to 0.5 part by weight based on 100 parts by weight of the solid-state hydrogenated nitrile-butadiene rubber.

Particularly, in the present invention, the moisture content of the finally obtained pre-dispersant composition may be controlled to 0.9 wt% or less, for example, 0.3 wt% or less by adjusting the temperature and time conditions to specific ranges in the step (A) of preparing the hydrogenated nitrile-butadiene rubber or the step (C) of mixing the solid-state hydrogenated nitrile-butadiene rubber and the amide-based dispersion medium. As a result, the degradation of the cycle characteristics may be suppressed by minimizing the reaction between the electrode active material and the moisture during coating of the electrode slurry composition to be described later.

As described above, in the present invention, the gel formation of the pre-dispersant composition may be suppressed to prevent an increase in the viscosity and the dispersibility of the conductive agent in the electrode slurry composition to be described later may be improved by providing the pre-dispersant composition containing the hydrogenated nitrile-butadiene rubber, instead of a non-hydrogenated nitrile-butadiene rubber, and having controlled viscosity and moisture content during the preparation of the pre-dispersant composition. Accordingly, since appropriate solid content and viscosity ranges of the electrode slurry composition may be maintained by uniformly dispersing the conductive agent between electrode active material particles, the electrode slurry composition having improved workability and processability, such as coatability, may be provided. As a result, since the penetration of the electrolyte solution is easy and resistance is reduced by securing the conductivity of the conductive material, an electrode for a secondary battery having excellent electrical, thermal, and mechanical properties and a lithium secondary battery, in which the cycle characteristics are improved by including the electrode for a secondary battery, may be achieved.

## Electrode Slurry Composition

Next, the electrode slurry composition according to the present invention will be described.

The electrode slurry composition of the present invention includes (1) an electrode active material, (2) a conductive agent, (3) a binder, (4) a solvent, and (5) the pre-dispersant composition of the present invention.

### (1) Electrode Active Material

The electrode active material may be a positive electrode active material or a negative electrode active material, and may preferably include a positive electrode active material.

As the positive electrode active material and the negative electrode active material, various positive electrode active materials and negative electrode active materials used in the art may be used, and types thereof are not particularly limited.

More specifically, the positive electrode active material may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-z}Ni_zO_4$ (where 0<Z<2)), lithium-nickel-cobalt-based oxide (e.g., $LiNi_{1-Y}Co_YO_2$ (where 0<Y<1)), lithium-manganese-cobalt-based oxide (e.g., $LiCo_{1-Y}Mn_YO_2$ (where 0<Y<1), $LiMn_{2-z}Co_zO_4$ (where 0<Z<2)), lithium-nickel-manganese-cobalt-based oxide (e.g., $Li(Ni_PCo_QMn_R)O_2$ (where 0<P<1, 0<Q<1, 0<R<1, and P+Q+R=1) or $Li(Ni_PCo_QMn_R)O_4$ (where 0<P<2, 0<Q<2, 0<R<2, and P+Q+R=2), or lithium-nickel-cobalt-transition metal (M) oxide (e.g., $Li(Ni_PCo_QMn_RM_S)O_2$ (where M is selected from the group consisting of aluminum (Al), iron (Fe), vanadium (V), chromium (Cr), titanium (Ti), tantalum (Ta), magnesium (Mg), and molybdenum (Mo), and P, Q, R, and S are atomic fractions of each independent elements, wherein 0<P<1, 0<Q<1, 0<R<1, 0<S<1, and P+Q+R+S=1). Also, the lithium metal oxide may be doped with tungsten (W). Among these materials, in terms of the improvement of capacity characteristics and stability of the battery, the positive electrode active material may be $LiCoO_2$, $LiMnO_2$, $LiNiO_2$, lithium nickel manganese cobalt oxide (e.g., $Li(Ni_{0.6}Mn_{0.2}Co_{0.2})O_2$, $LiNi_{0.5}Mn_{0.3}Co_{0.2}O_2$, or $LiNi_{0.8}Mn_{0.1}Co_{0.1}O_2$), or lithium nickel cobalt aluminum oxide (e.g., $LiNi_{0.8}Co_{0.15}Al_{0.05}O_2$, etc.). Among these materials, in terms of the improvement of the capacity characteristics and stability of the battery, the positive electrode active material may be $LiNi_{0.6}Mn_{0.2}Co_{0.2}O_2$, $LiNi_{0.5}Mn_{0.3}Co_{0.2}O_2$, $LiNi_{0.7}Mn_{0.15}Co_{0.15}O_2$, or $LiNi_{0.8}Mn_{0.1}Co_{0.1}O_2$, and any one thereof or a mixture of two or more thereof may be used.

Also, the negative electrode active material is a compound capable of reversibly intercalating and deintercalating lithium, wherein the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_x$ ($0<x\leq2$), $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

### (2) Conductive Agent

The conductive agent is not particularly limited so long as it has conductivity without causing adverse chemical changes in the battery, and, for example, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon nanotubes (CNT), carbon fibers (CF), or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used. Preferably, carbon black may be used as the conductive agent.

The conductive agent is added in an amount of 0.3 part by weight to 50 parts by weight, particularly 0.5 part by weight to 15 parts by weight, and more particularly 0.7 part by weight to 10 parts by weight based on a total weight of a solid content in a positive electrode slurry. If the amount of the conductive agent is excessively small at less than 0.3 part by weight, it may be difficult to expect an effect of improving electrical conductivity or electrochemical properties of the battery may be deteriorated, and, if the amount of the conductive agent is excessively large at greater than 50 parts by weight, since an amount of the positive electrode active material is relatively decreased, capacity and energy density may be reduced.

### (3) Binder

The binder improves the adhesion between electrode active material particles and the adhesion between the electrode active material and a current collector. Specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be included in an amount of 1 wt% to 30 wt% based on a total weight of the electrode slurry

composition.

### (4) Solvent

The solvent may be a solvent normally used in the art, wherein the solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the electrode active material and the binder in consideration of a coating thickness of a slurry and manufacturing yield, and may allow to have a viscosity that may provide excellent thickness uniformity during the subsequent coating for the preparation of the electrode.

For example, when a positive electrode is prepared, the solvent may be included so that a concentration of a solid content in a slurry including the positive electrode active material, the binder, and the conductive agent is in a range of 10 wt% to 85 wt%, for example, 20 wt% to 75 wt%.

Also, when a negative electrode is prepared, the solvent may be included so that a concentration of a solid content in a slurry including the negative electrode active material, the binder, and the conductive agent is in a range of 40 wt% to 75 wt%, for example, 40 wt% to 65 wt%.

### (5) Pre-dispersant Composition

Since a description of the pre-dispersant composition overlaps with the above description, the description thereof will be omitted.

However, for uniform dispersion of the conductive agent, the pre-dispersant composition may be included so that a relative amount of the hydrogenated nitrile-butadiene rubber contained in the pre-dispersant composition is in a range of 1 part by weight to 50 parts by weight, for example, 5 parts by weight to 30 parts by weight based on 100 parts by weight of the conductive agent. In a case in which the amount of the hydrogenated nitrile-butadiene rubber is contained within the above range, powder resistance of the conductive agent is reduced to improve the dispersibility of the conductive agent, and simultaneously, the coatability may be improved by controlling the viscosity of the electrode slurry composition.

If the amount of the hydrogenated nitrile-butadiene rubber contained in the pre-dispersant composition is greater than 50 parts by weight based on 100 parts by weight of the conductive agent, since the viscosity of the electrode slurry composition is increased and an absolute amount of the conductive agent in the electrode slurry composition is decreased to reduce the dispersibility of the conductive agent and the conductivity in the electrode, the processability, such as coatability, of the electrode slurry composition is deteriorated and the cycle characteristics are degraded, and thus, it is not easy to form an electrode with improved overall performance. Also, if the amount of the hydrogenated nitrile-butadiene rubber contained in the pre-dispersant composition is less than 1 part by weight, since an absolute amount of the hydrogenated nitrile-butadiene rubber, as a dispersant, in the electrode slurry composition is decreased to reduce the dispersibility of the conductive agent, an agglomeration phenomenon is caused and the powder resistance is increased, and thus, electrode output characteristics may degrade.

Viscosity of the electrode slurry composition may be in a range of 10,000 cPs to 40,000 cPs, for example, 10,000 cPs to 35,000 cPs.

For example, in a case in which the viscosity of the electrode slurry composition including the pre-dispersant composition of the present invention satisfies the above range, since the electrode slurry composition may be coated with a uniform thickness on an aluminum current collector, there is an advantage in that conductivity of the battery is maximized by uniformly controlling distribution of the active material and the conductive agent in an electrode coating layer.

If, in a case in which the viscosity of the electrode slurry composition, particularly the positive electrode slurry composition is greater than 40,000 cPs, since it is difficult for the composition to pass through a filter during coating due to an increase in the viscosity, there is a disadvantage in that productivity is not only reduced, but also coating uniformity is deteriorated and the coatability is deteriorated, for example, formation of craters is induced because degassing is not smooth. Also, in a case in which the viscosity of the positive electrode slurry composition is less than 10,000 cPs, since it is difficult to maintain a uniform thickness due to high flowability of the slurry composition, there is a disadvantage in that it is difficult to complete a coating process and the coatability is deteriorated.

Furthermore, shear viscosity of the electrode slurry composition, particularly the positive electrode slurry composition may be in a range of 10 Pas to 40 Pas, for example, 10 Pas to 35 Pas.

In a case in which the shear viscosity of the electrode slurry composition including the pre-dispersant composition of the present invention satisfies the above range, since the electrode slurry composition may be coated with a uniform thickness on the aluminum current collector, there is an advantage in that the conductivity of the battery is maximized by uniformly controlling the distribution of the active material and the conductive agent in the electrode coating layer.

If, in a case in which the shear viscosity of the electrode slurry composition, particularly the positive electrode slurry composition is greater than 40 Pas, since the viscosity is increased to deteriorate the coating uniformity, the

productivity may be reduced. Also, in a case in which the shear viscosity of the electrode slurry composition is less than 10 Pas, since it is difficult to complete the coating process as the flowability of the electrode slurry composition is increased, there is a disadvantage in that the coatability is deteriorated.

**(6) Others**

A viscosity modifier and a filler may be optionally added in the electrode slurry composition of the present invention, if necessary. The viscosity modifier is a component that adjusts viscosity of an electrode material mixture so that a mixing process of the electrode material mixture and a coating process thereof on a current collector are easy, wherein examples of the viscosity modifiers are carboxymethylcellulose and polyacrylic acid, but the present invention is not limited thereto. The filler is not particularly limited as long as it is a fibrous material without causing adverse chemical changes in the battery, and, for example, an olefin-based polymer such as polyethylene and polypropylene; and a fibrous material, such as glass fibers and carbon fibers, may be used.

## Electrode

Next, an electrode according to the present invention will be described.

The electrode according to the present invention may be a positive electrode or a negative electrode, and may be prepared by the same method as a general method of preparing an electrode except that the above-described electrode slurry composition of the present invention is used.

Specifically, the electrode according to the present invention may be prepared by (1) a method of coating an electrode slurry composition on an electrode collector, drying, and then rolling the coated electrode collector, or (2) a method of casting the electrode slurry composition on a separate base material, drying the electrode slurry composition, bonding the dried electrode slurry composition to an electrode collector through a method, such as pressing or lamination, and then rolling the electrode collector.

A type of the electrode collector is not particularly limited as long as the electrode collector has high conductivity without causing adverse chemical changes in the battery. For example, copper, stainless steel, aluminum, nickel, titanium, fired carbon, or copper or stainless steel that is surface-treated with one of carbon, nickel, titanium, or silver, and an aluminum-cadmium alloy may be used as the electrode collector. Preferably, the electrode collector may be a metal foil, and may be an aluminum (Al) foil or a copper (Cu) foil. Specifically, a positive electrode collector may be a metal current collector including aluminum, and a negative electrode collector may be a metal current collector including copper.

The coating method of the electrode slurry composition is not particularly limited, but may be performed by using various coating methods used in the art, for example, any coater head such as a reverse roll method, a comma bar method, a gravure method, and an air knife method. Specifically, the electrode slurry composition may be passed through the coater head and coated on the electrode collector in a predetermined pattern and thickness.

The drying is a process of removing the solvent and moisture in the electrode slurry composition, wherein, for example, the drying may be performed using stand-alone drying, a blow dryer, a warm air dryer, an infrared heater, and a far infrared heater. The drying temperature, for example, may be in a range of about 50°C to 200°C.

Next, the rolling is to increase capacity density of the electrode and increase adhesion between the current collector and the active material, wherein the rolling may be performed by a method in which the electrode is compressed to a desired thickness by passing the electrode between two rolling rolls heated to a high temperature. Rolling thickness, rolling temperature, and rolling time during the rolling may be appropriately adjusted according to final desired physical properties of the electrode. Although not essential, a process of preheating the electrode may be further performed before the rolling process to increase rolling efficiency.

## Secondary Battery

Furthermore, a secondary battery according to the present invention will be described.

The secondary battery according to the present invention includes the above-described electrode according to the present invention, wherein, specifically, it includes a positive electrode, a negative electrode disposed to face the positive electrode, a separator disposed between the positive electrode and the negative electrode, and an electrolyte, and at least one of the positive electrode and the negative electrode is prepared by the electrode slurry composition including the pre-dispersant composition. Also, the lithium secondary battery may further optionally include a battery container accommodating an electrode assembly of the positive electrode, the negative electrode, and the separator, and a sealing member sealing the battery container.

The secondary battery is a lithium secondary battery, and, for example, may be a lithium ion secondary battery, a lithium polymer secondary battery, or a lithium ion polymer secondary battery.

The separator separates the negative electrode and the positive electrode and provides a movement path of

lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, as the electrolyte, an organic liquid electrolyte, an inorganic liquid electrolyte, a solid polymer electrolyte, a gel-type polymer electrolyte, a solid inorganic electrolyte, or a molten-type inorganic electrolyte, which may be used in the preparation of the secondary battery, may be used, but a type thereof is not particularly limited.

For example, the electrolyte may include a non-aqueous organic solvent and a metal salt, and, in this case, as the non-aqueous organic solvent, for example, an aprotic organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Also, a lithium salt may be used as the metal salt, and, specifically, a lithium salt, which includes at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ as an anion, may be used, but the present invention is not limited thereto.

In order to improve lifetime characteristics of the battery, suppress the reduction in battery capacity, and improve discharge capacity of the battery, additives may be further included in the electrolyte in addition to the electrolyte components. For example, the additive may be at least one selected from a sultone-based compound, a sulfate-based compound, a phosphate-based compound, a borate-based compound, a nitrile-based compound, an amine-based compound, a silane-based compound, a benzene-based compound, and a lithium salt-based compound.

The sultone-based compound is a material capable of forming a stable solid electrolyte interphase (SEI) on a surface of the negative electrode by a reduction reaction, wherein the sultone-based compound may be at least one compound selected from 1,3-propane sultone (PS), 1,4-butane sultone, ethane sultone, 1,3-propene sultone (PRS), 1,4-butene sultone, and 1-methyl-1,3-propene sultone, and may specifically be 1,3-propane sultone (PS).

The sulfate-based compound is a material capable of forming a stable SEI, which does not crack even during high-temperature storage, by being electrically decomposed on the surface of the negative electrode, wherein the sulfate-based compound may be at least one selected from ethylene sulfate (Esa), trimethylene sulfate (TMS), or methyl trimethylene sulfate (MTMS).

The phosphate-based compound may be at least one selected from lithium difluoro bis(oxalato)phosphate, lithium difluoro phosphate, tris(trimethylsilyl)phosphite, tris(2,2,2-trifluoroethyl)phosphate, and tris(trifluoroethyl)phosphite.

The nitrile-based compound may be at least one selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The amine-based compound may be at least one selected from triethanolamine and ethylene diamine, and the silane-based compound may be tetravinylsilane.

The benzene-based compound may be at least one selected from monofluorobenzene, difluorobenzene, trifluorobenzene, and tetrafluorobenzene.

The lithium salt-based compound is a compound different from the lithium salt included in the non-aqueous electrolyte, wherein the lithium salt-based compound may be at least one compound selected from $LiPO_2F_2$, LiBOB (lithium bisoxalatoborate ($LiB(C_2O_4)_2$)), and lithium tetrafluoroborate ($LiBF_4$).

An amount of the additive may be in a range of 0.1 wt% to 10 wt%, for example, 1 wt% to 5 wt% based on a total weight of the electrolyte. In a case in which the amount of the additive is less than 0.1 wt%, an effect of improving low-temperature capacity, high-temperature storage characteristics, and high-temperature life characteristics is insignificant, and, in a case in which the amount of the additive is greater than 10 wt%, a side reaction in the electrolyte may excessively occur during charge and discharge of the battery.

The lithium secondary battery including the electrode prepared by using the pre-dispersant composition according to the present invention as described above may stably exhibit excellent discharge capacity, output characteristics, and capacity retention due to the uniform dispersion of the conductive agent in the electrode. As a result, the lithium secondary battery is suitable for portable devices, such as mobile phones, notebook computers, and digital cameras, and electric cars such as hybrid electric vehicles (HEVs).

Hereinafter, preferred examples are presented in order to help better understanding of the present invention, but the following examples are merely presented to exemplify the present invention.

## Examples

### I. Pre-dispersant Composition Preparation

#### Example 1.

(Preparing Hydrogenated Nitrile-Butadiene Rubber)

After a rubber solution (solid content 12%) was prepared by dissolving a nitrile-butadiene rubber (manufactured by Arlanxeo, product name Therban® AT 3404; acrylonitrile-derived repeating unit : repeating unit of hydrogenated butadiene-derived structure = 34:66 weight ratio), which was hydrogenated through a hydrogenation reaction, in chlorobenzene, 300 g of the rubber solution was added to a 1 L glass reactor and steam stripped to a crumb state. Then, 18 mg of calcium stearate and 7 mg of talc, as a release agent, were added to the rubber crumb, mixed, and then dried for 16 hours in a vacuum oven heated to 80°C to obtain 35 g of a solid-state hydrogenated nitrile-butadiene rubber (weight-average molecular weight (Mw): 210,000 g/mol). In this case, with respect to the weight-average molecular weight (Mw) of the hydrogenated nitrile-butadiene rubber of the present invention, a sample was dissolved in tetrahydrofuran and then analyzed by injecting the solution at a rate of 1 mL/min into a gel permeation chromatograph-refractive index detector (1260 Infinity II, manufacturer: Agilent), and a polymer separated according to a dissolution rate for a column was measured using a polystyrene standard sample.

(Preparing Pre-dispersant Composition)

After 94 g of N-methylpyrrolidone (NMP) was added to a 250 mL round flask, nitrogen gas was added to remove oxygen.

After the solid-state hydrogenated nitrile-butadiene rubber was chopped or ground to a weight of about 2 g or less, 6 g of the hydrogenated nitrile-butadiene rubber chopped and 12 mg of butylated hydroxytoluene (BHT), as an antioxidant, were added to the flask and stirred for 6 hours under an oil bath heated to 125°C.

After the reaction was completed, a reactant was cooled to 40°C, the addition of the nitrogen was then stopped, and a pre-dispersant composition (moisture content: 0.13%, viscosity: 210 cPs, solid content: 6 wt%, aluminum (Al) element concentration: 0 ppm, calcium (Ca) element concentration: 10 ppm, silicon element concentration: 0 ppm), from which impurities were removed by filtration using a filter paper, was prepared.

In this case, the viscosity of the pre-dispersant composition of the present invention was measured with a Brookfield viscometer (DV2T (LV or RV), manufacturer: Brookfield) at a speed of 60 rpm using a No. 63 spindle at 25°C. Also, with respect to the moisture content of the pre-dispersant composition of the present invention, titration was performed after injecting a weighed sample into a Karl Fischer titrator (899 Coulometer, manufacturer: Metrohm), wherein the moisture content was measured by an amount of Karl Fischer reagent consumed in this case. Furthermore, the content of metallic element or semi-metallic element in the pre-dispersant composition of the present invention was measured using an inductively coupled plasma optical emission spectrometer (Optima 5300DV, manufacturer: PerkinElmer) with reference to US EPA method 3052.

#### Example 2.

(Preparing Hydrogenated Nitrile-Butadiene Rubber)

After a rubber solution (solid content 12%) was prepared by dissolving a nitrile-butadiene rubber (manufactured by Arlanxeo, product name Therban® AT 3404), which was hydrogenated through a hydrogenation reaction, in chlorobenzene, 300 g of the rubber solution and 0.72 g of aluminum sulfate, as a coagulant, were added in advance to a 1 L glass reactor, stirred, and then steam stripped to a crumb state. Subsequently, 36 mg of calcium stearate and 18 mg of talc, as a release agent, were added to the rubber crumb, mixed, and then dried for 16 hours in a vacuum oven heated to 80°C to obtain 35 g of a solid-state hydrogenated nitrile-butadiene rubber (weight-average molecular weight (Mw) : 200,000 g/mol).

(Preparing Pre-dispersant Composition)

A pre-dispersant composition (moisture content: 0.15%, viscosity: 200 cPs, solid content: 6 wt%, aluminum (Al) element concentration: 75 ppm, calcium (Ca) element concentration: 25 ppm, silicon element concentration: 15 ppm) was prepared in the same manner as in Example 1 except that the hydrogenated nitrile-butadiene rubber recovered was used.

**Example 3.**

(Preparing Pre-dispersant Composition)

A pre-dispersant composition (moisture content: 0.15%, viscosity: 760 cPs, solid content: 8 wt%, aluminum (Al) element concentration: 0 ppm, calcium (Ca) element concentration: 13 ppm, silicon element concentration: 0 ppm) was prepared in the same manner as in Example 1 except that 8 g of the hydrogenated nitrile-butadiene rubber prepared and chopped in Example 1 and 16 mg of butylated hydroxytoluene (BHT), as an antioxidant, were added to 92 g of N-methylpyrrolidone.

**Example 4.**

(Preparing Hydrogenated Nitrile-Butadiene Rubber)

35 g of a solid-state hydrogenated nitrile-butadiene rubber (weight-average molecular weight (Mw): 210,000 g/mol) was obtained in the same manner as in Example 1 except that drying was performed for 10 hours in a vacuum oven.

(Preparing Pre-dispersant Composition)

A pre-dispersant composition (moisture content: 0.3%, viscosity: 760 cPs, solid content: 8 wt%, aluminum (Al) element concentration: 0 ppm, calcium (Ca) element concentration: 12 ppm, silicon element concentration: 0 ppm) was prepared in the same manner as in Example 3 except that the hydrogenated nitrile-butadiene rubber recovered was used.

**Example 5.**

(Preparing Pre-dispersant Composition)

A pre-dispersant composition (moisture content: 0.15%, viscosity: 1570 cPs, solid content: 10 wt%, aluminum (Al) element concentration: 0 ppm, calcium (Ca) element concentration: 17 ppm, silicon element concentration: 0 ppm) was prepared in the same manner as in Example 1 except that about 10 g of the hydrogenated nitrile-butadiene rubber prepared and chopped in Example 1 and 20 mg of butylated hydroxytoluene (BHT), as an antioxidant, were added to 90 g of N-methylpyrrolidone (NMP).

**Example 6.**

(Preparing Hydrogenated Nitrile-Butadiene Rubber)

35 g of a solid-state hydrogenated nitrile-butadiene rubber (weight-average molecular weight (Mw): 200,000 g/mol) was obtained in the same manner as in Example 1 except that, after 300 g of a rubber solution (solid content 12%) was prepared by dissolving a nitrile-butadiene rubber (manufactured by Arlanxeo, product name Therban® AT 3404), which was hydrogenated through a hydrogenation reaction, in chlorobenzene, 1.08 g of aluminum sulfate was added and steam stripped, and 48 mg of calcium stearate and 7 mg of talc were then added to nitrile rubber crumb and mixed.

(Preparing Pre-dispersant Composition)

A pre-dispersant composition (moisture content: 0.2%, viscosity: 200 cPs, solid content: 6 wt%, aluminum (Al) element concentration: 100 ppm, calcium (Ca) element concentration: 55 ppm, silicon element concentration: 0 ppm) was prepared in the same manner as in Example 1 except that the hydrogenated nitrile-butadiene rubber recovered was used.

**Example 7.**

(Preparing Hydrogenated Nitrile-Butadiene Rubber)

35 g of a solid-state hydrogenated nitrile-butadiene rubber (weight-average molecular weight (Mw): 190,000 g/mol) was obtained in the same manner as in Example 1 except that, after 300 g of a rubber solution (solid content 12%) was prepared by dissolving a nitrile-butadiene rubber (manufactured by Arlanxeo, product name Therban® AT 3404), which was hydrogenated through a hydrogenation reaction, in chlorobenzene, 0.24 g of aluminum sulfate was added and steam stripped, and 48 mg of calcium stearate and 36 mg of talc were then added to nitrile rubber crumb and mixed.

(Preparing Pre-dispersant Composition)

A pre-dispersant composition (moisture content: 0.15%, viscosity: 200 cPs, solid content: 6 wt%, aluminum (Al) element concentration: 20 ppm, calcium (Ca) element concentration: 60 ppm, silicon element concentration: 30 ppm) was prepared in the same manner as in Example 1 except that the hydrogenated nitrile-butadiene rubber recovered was used.

**Example 8.**

(Preparing Hydrogenated Nitrile-Butadiene Rubber)

35 g of a solid-state hydrogenated nitrile-butadiene rubber (weight-average molecular weight (Mw): 190,000 g/mol) was obtained in the same manner as in Example 1 except that, after 300 g of a rubber solution (solid content 12%) was prepared by dissolving a nitrile-butadiene rubber (manufactured by Arlanxeo, product name Therban® AT 3404), which was hydrogenated through a hydrogenation reaction, in chlorobenzene, 0.24 g of aluminum sulfate was added and steam stripped, and 27 mg of calcium stearate and 7 mg of talc were then added to nitrile rubber crumb, mixed, and dried for 6 hours in a vacuum oven.

(Preparing Pre-dispersant Composition)

A pre-dispersant composition (moisture content: 0.5%, viscosity: 760 cPs, solid content: 8 wt%, aluminum (Al) element concentration: 25 ppm, calcium (Ca) element concentration: 34 ppm, silicon element concentration: 0 ppm) was prepared in the same manner as in Example 1 except that the hydrogenated nitrile-butadiene rubber recovered was used.

**Example 9.**

(Preparing Hydrogenated Nitrile-Butadiene Rubber)

35 g of a solid-state hydrogenated nitrile-butadiene rubber (weight-average molecular weight (Mw): 210,000 g/mol) was obtained in the same manner as in Example 1 except that drying was performed for 6 hours in a vacuum oven.

(Preparing Pre-dispersant Composition)

A pre-dispersant composition (moisture content: 0.5%, viscosity: 760 cPs, solid content: 8 wt%, aluminum (Al) element concentration: 0 ppm, calcium (Ca) element concentration: 17 ppm, silicon element concentration: 0 ppm) was prepared in the same manner as in Example 3 except that the hydrogenated nitrile-butadiene rubber recovered was used.

**Example 10.**

(Preparing Pre-dispersant Composition)

A pre-dispersant composition (moisture content: 0.1%, viscosity: 70 cPs, solid content: 4 wt%, aluminum (Al) element concentration: 0 ppm, calcium (Ca) element concentration: 7 ppm, silicon element concentration: 0 ppm) was prepared in the same manner as in Example 1 except that about 2 g of the hydrogenated nitrile-butadiene rubber prepared and chopped in Example 1 and 4 mg of an antioxidant were added to 96 g of N-methylpyrrolidone (NMP).

**Comparative Example 1.**

(Preparing Hydrogenated Nitrile-Butadiene Rubber)

35 g of a solid-state hydrogenated nitrile-butadiene rubber (weight-average molecular weight (Mw): 210,000

g/mol) was obtained in the same manner as in Example 1 except that 15 mg of calcium stearate was included.

(Preparing Pre-dispersant Composition)

After 88 g of N-methylpyrrolidone (NMP) was added to a 250 mL round flask, nitrogen gas was added to remove oxygen.

Then, a pre-dispersant composition (moisture content: 0.2%, viscosity: 3,200 cPs, solid content: 12 wt%, aluminum (Al) element concentration: 0 ppm, calcium (Ca) element concentration: 20 ppm, silicon element concentration: 0 ppm) was prepared in the same manner as in Example 1 except that, after the hydrogenated nitrile-butadiene rubber prepared was chopped or ground to a weight of about 2 g or less, about 12 g of the hydrogenated nitrile-butadiene rubber chopped and 24 mg of an antioxidant were added.

**Comparative Example 2.**

(Preparing Hydrogenated Nitrile-Butadiene Rubber)

35 g of a solid-state hydrogenated nitrile-butadiene rubber (weight-average molecular weight (Mw): 210,000 g/mol) was obtained in the same manner as in Example 1 except that 36 mg of talc was included.

(Preparing Pre-dispersant Composition)

After 85 g of N-methylpyrrolidone (NMP) was added to a 250 mL round flask, nitrogen gas was added to remove oxygen.

Then, a pre-dispersant composition (moisture content: 0.15%, viscosity: 13,000 cPs, solid content: 15 wt%, aluminum (Al) element concentration: 0 ppm, calcium (Ca) element concentration: 25 ppm, silicon element concentration: 100 ppm) was prepared in the same manner as in Example 1 except that, after the hydrogenated nitrile-butadiene rubber prepared was chopped or ground to a weight of about 2 g or less, about 15 g of the hydrogenated nitrile-butadiene rubber chopped and 30 mg of an antioxidant were added.

**Comparative Example 3.**

(Preparing Hydrogenated Nitrile-Butadiene Rubber)

35 g of a solid-state hydrogenated nitrile-butadiene rubber (weight-average molecular weight (Mw): 210,000 g/mol) was obtained in the same manner as in Example 1 except that drying was performed for 3 hours in a vacuum oven.

(Preparing Pre-dispersant Composition)

A pre-dispersant composition (moisture content: 1%, viscosity: 780 cPs, solid content: 8 wt%, aluminum (Al) element concentration: 0 ppm, calcium (Ca) element concentration: 13 ppm, silicon element concentration: 0 ppm) was prepared in the same manner as in Example 3 except that the hydrogenated nitrile-butadiene rubber recovered was used.

**Comparative Example 4.**

(Preparing Pre-dispersant Composition)

A pre-dispersant composition (moisture content: 0.1%, viscosity: 5 cPs, solid content: 2 wt%, aluminum (Al) element concentration: 0 ppm, calcium (Ca) element concentration: 3 ppm, silicon element concentration: 0 ppm) was prepared in the same manner as in Example 1 except that about 2 g of the hydrogenated nitrile-butadiene rubber prepared and chopped in Example 1 and 4 mg of an antioxidant were added to 98 g of N-methylpyrrolidone (NMP).

**Comparative Example 5.**

(Preparing Pre-dispersant Composition Including Non-hydrogenated Nitrile-Butadiene Rubber)

After 92 g of N-methylpyrrolidone (NMP) was added to a 250 mL round flask, nitrogen gas was added to remove oxygen.

Then, a pre-dispersant composition (moisture content: 0.1%, viscosity: 330 cPs, solid content: 8 wt%, and Al, Ca,

and Si unanlayzed) was prepared in the same manner as in Example 1 except that, after the non-hydrogenated nitrile-butadiene rubber (manufactured by LG Chem, product name NBR 6240; acrylonitrile-derived repeating unit : repeating unit of butadiene-derived structure = 34:66 weight ratio) was chopped or ground to a weight of about 2 g or less, about 8 g of the chopped nitrile-butadiene rubber and 16 mg of an antioxidant were added.

## II. Secondary Battery Preparation Method

### Example 11.

(Positive Electrode Preparation Method)

A positive electrode active material ($LiNi_{0.6}Mn_{0.2}Co_{0.2}O_2$), carbon black, a PVdF binder (molecular weight 880 kg/mol), and the pre-dispersant composition of Example 1 were added to N-methylpyrrolidone (NMP) at a weight ratio of 94:1:1.5:3.5 to prepare a positive electrode slurry composition. An aluminum current collector was coated with the prepared positive electrode slurry composition at a loading amount of 480 mg/25 $cm^2$, dried at 130°C, and then roll-pressed to prepare a positive electrode.

(Secondary Battery Preparation)

Artificial graphite as a negative electrode active material, carbon black, carboxymethyl cellulose, and a styrene-butadiene copolymer binder were mixed in distilled water at a weight ratio of 95.9:1:1.1:2 to prepare a negative electrode slurry composition, and a copper current collector was coated with the negative electrode slurry composition to prepare a negative electrode.

After an electrode assembly was prepared by disposing a porous polyethylene separator between the positive electrode and negative electrode prepared as described above and the electrode assembly was put in a case, an electrolyte solution was injected into the case to prepare a lithium secondary battery. In this case, the electrolyte solution was prepared by dissolving 1.0 M lithium hexafluorophosphate ($LiPF_6$) in an organic solvent composed of ethylene carbonate/dimethyl carbonate/ethyl methyl carbonate (mixing volume ratio of EC/DMC/EMC=3/4/3).

### Example 12.

A positive electrode and a lithium secondary battery including the same were prepared in the same manner as in Example 11 except that the pre-dispersant composition of Example 2, instead of the pre-dispersant composition of Example 1, was included during the preparation of the positive electrode.

### Example 13.

A positive electrode and a lithium secondary battery including the same were prepared in the same manner as in Example 11 except that the pre-dispersant composition of Example 3, instead of the pre-dispersant composition of Example 1, was included during the preparation of the positive electrode.

### Example 14.

A positive electrode and a lithium secondary battery including the same were prepared in the same manner as in Example 11 except that the pre-dispersant composition of Example 4, instead of the pre-dispersant composition of Example 1, was included during the preparation of the positive electrode.

### Example 15.

A positive electrode and a lithium secondary battery including the same were prepared in the same manner as in Example 11 except that the pre-dispersant composition of Example 5, instead of the pre-dispersant composition of Example 1, was included during the preparation of the positive electrode.

### Example 16.

A positive electrode and a lithium secondary battery including the same were prepared in the same manner as in Example 11 except that the pre-dispersant composition of Example 6, instead of the pre-dispersant composition of Example 1, was included during the preparation of the positive electrode.

**Example 17.**

A positive electrode and a lithium secondary battery including the same were prepared in the same manner as in Example 11 except that the pre-dispersant composition of Example 7, instead of the pre-dispersant composition of Example 1, was included during the preparation of the positive electrode.

**Example 18.**

A positive electrode and a lithium secondary battery including the same were prepared in the same manner as in Example 11 except that the pre-dispersant composition of Example 8, instead of the pre-dispersant composition of Example 1, was included during the preparation of the positive electrode.

**Example 19.**

A positive electrode and a lithium secondary battery including the same were prepared in the same manner as in Example 11 except that the pre-dispersant composition of Example 9, instead of the pre-dispersant composition of Example 1, was included during the preparation of the positive electrode.

**Example 20.**

A positive electrode and a lithium secondary battery including the same were prepared in the same manner as in Example 11 except that the pre-dispersant composition of Example 10, instead of the pre-dispersant composition of Example 1, was included during the preparation of the positive electrode.

**Comparative Example 6.**

The same method as in Example 11 was performed except that the pre-dispersant composition of Comparative Example 1, instead of the pre-dispersant composition of Example 1, was included during the preparation of a positive electrode, but accurate measurement of a positive electrode slurry composition was not possible.

**Comparative Example 7.**

The same method as in Example 11 was performed except that the pre-dispersant composition of Comparative Example 2, instead of the pre-dispersant composition of Example 1, was included during the preparation of a positive electrode, but accurate measurement of a positive electrode slurry composition was not possible.

**Comparative Example 8.**

A positive electrode and a lithium secondary battery including the same were prepared in the same manner as in Example 11 except that the pre-dispersant composition of Comparative Example 3, instead of the pre-dispersant composition of Comparative Example 1, was included during the preparation of the positive electrode.

**Comparative Example 9.**

A positive electrode and a lithium secondary battery including the same were prepared in the same manner as in Example 11 except that the pre-dispersant composition of Comparative Example 4, instead of the pre-dispersant composition of Example 1, was included during the preparation of the positive electrode.

**Experimental Examples**

**Experimental Example 1. Viscosity Evaluation Test of** Pre-dispersant Composition

Immediately after preparing the pre-dispersant compositions by the methods of Example 3 and Comparative Example 5, viscosity was measured at room temperature (25°C), and, subsequently, viscosity, after each of the pre-dispersant compositions was stirred at 80 rpm and 70°C for 3 days and cooled to room temperature, was measured to compare changes in viscosity. The viscosity was measured with a Brookfield viscometer (DV2T (LV or RV), manufacturer: Brookfield) at a speed of 60 rpm using a No. 63 spindle.

[Table 1]

| | Viscosity (cPs) | |
|---|---|---|
| | Immediately after the preparation | After 3 days storage |
| Example 3 | 760 | 750 |
| Comparative Example 5 | 330 | 920 |

Referring to Table 1, with respect to the pre-dispersant composition of Example 3 using the hydrogenated nitrile-butadiene rubber, it may be understood that there was no increase in viscosity even after storage for 3 days in comparison to Comparative Example 5 using the non-hydrogenated nitrile-butadiene rubber. Thus, if the pre-dispersant composition of the present invention is used, it seems to be able to secure coatability and safety of the electrode slurry composition.

**Experimental Example 2. Viscosity Evaluation Test of Positive Electrode Slurry Composition**

Shear viscosity was measured for the positive electrode slurry compositions prepared in Examples 11 to 20 and the positive electrode slurry compositions prepared in Comparative Examples 6, 7, and 9 at a shear rate of 2.5/s using a rheometer (AR series, manufacturer: TA instruments), and the results thereof are presented in Table 2 below.

[Table 2]

| | Shear viscosity (Pas) |
|---|---|
| Example 11 | 20 |
| Example 12 | 20 |
| Example 13 | 25 |
| Example 14 | 25 |
| Example 15 | 32 |
| Example 16 | 20 |
| Example 17 | 20 |
| Example 18 | 25 |
| Example 19 | 25 |
| Example 20 | 10 |
| Comparative Example 6 | 41 |
| Comparative Example 7 | 56 |
| Comparative Example 9 | 5 |

Referring to Table 2, with respect to the positive electrode slurry compositions of Examples 11 to 20 including the pre-dispersant composition of the present invention, it may be understood that, since dispersibility was improved, they had shear viscosities capable of securing the coatability.

In contrast, with respect to the positive electrode slurry compositions of Comparative Examples 6 and 7 prepared by using the pre-dispersant compositions with high viscosity, since shear viscosities greater than 40 Pas were obtained, positive electrode coating uniformity is likely to deteriorate.

Shear viscosity of the positive electrode slurry composition of Comparative Example 9 prepared by using the pre-dispersant composition with low viscosity was 5 Pas, wherein it was not easy to complete the coating process as the flowability of the positive electrode slurry composition was increased.

**Experimental Example 3. Cycle Characteristics Evaluation Test**

Charging of each of the lithium secondary batteries prepared in Examples 11 to 20 and the lithium secondary batteries prepared in Comparative Examples 6 to 9 at 1 C rate to 4.25 V under a constant current/constant voltage condition at 45°C and then discharging of each lithium secondary battery at 1 C rate to 2.5 V under a constant current condition was set as one cycle, and capacity retention was measured after 300 cycles of the charging and discharging were performed.

The capacity retention (%) was calculated according to the following [Equation 1]. Measurement results are listed in Table 3 below.

Capacity retention (%) = (discharge capacity after 300 cycles/discharge capacity after one cycle) × 100 [Equation 1]

[Table 3]

| | Capacity retention (%) |
|---|---|
| Example 11 | 85 |
| Example 12 | 84 |
| Example 13 | 89 |
| Example 14 | 87 |
| Example 15 | 88 |
| Example 16 | 77 |
| Example 17 | 81 |
| Example 18 | 78 |
| Example 19 | 80 |
| Example 20 | 78 |
| Comparative Example 6 | Not measurable |
| Comparative Example 7 | Not measurable |
| Comparative Example 8 | 65 |
| Comparative Example 9 | 69 |

Referring to Table 3, it may be understood that capacity retentions of the lithium secondary batteries of Examples 11 to 20, which included the electrode including the pre-dispersant composition of the present invention, were about 77% or more.

In contrast, capacity retentions of the lithium secondary battery of Comparative Example 8, which included the positive electrode including the pre-dispersant composition with a high moisture content, and the lithium secondary battery of Comparative Example 9, which included the positive electrode including the pre-dispersant composition with low viscosity, were 65% and 69%, respectively, wherein it may be understood that the capacity retentions were reduced in comparison to those of the lithium secondary batteries of Examples 11 to 20. With respect to the positive electrode slurry compositions of Comparative Examples 6 and 7 prepared by using the pre-dispersant compositions with high viscosity, since the positive electrode coating uniformity was deteriorated due to the shear viscosities greater than 40 Pas, preparation of positive electrode and lithium secondary battery were not possible, and thus, the test may not be conducted.

## Claims

**1.** A pre-dispersant composition comprising a hydrogenated nitrile-butadiene rubber, an amide-based dispersion medium, and a metallic element or a semi-metallic element,

wherein viscosity of the pre-dispersant composition is in a range of 70 cPs to 3,000 cPs, measured by Brookfield viscometer, a t 25°C, and a moisture content of the pre-dispersant composition is 0.9 wt% or less,
wherein a solid content in the pre-dispersant composition is in a range of 4 wt% to 11 wt% based on a total weight of the pre-dispersant composition,
wherein the metallic element or semi-metallic element is at least one selected from aluminum (Al), calcium (Ca), and silicon (Si), wherein the metallic element or the semi-metallic element has a concentration of 150 ppm or less.

**2.** The pre-dispersant composition of claim 1, wherein the hydrogenated nitrile-butadiene rubber comprises:

a repeating unit of an acrylonitrile-derived structure represented by Formula 1; and

a repeating unit including at least one of repeating units of hydrogenated butadiene-derived structures represented by Formulae 2 and 3.

[Formula 1]

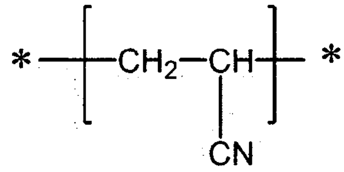

[Formula 2]

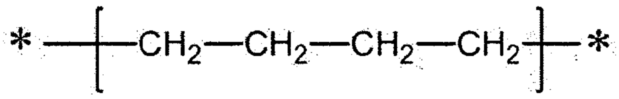

[Formula 3]

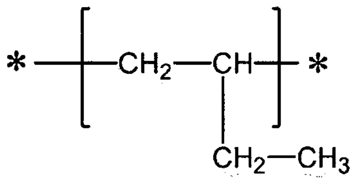

**3.** The pre-dispersant composition of claim 2, wherein a weight ratio of the repeating unit of the acrylonitrile-derived structure : the repeating unit of the hydrogenated butadiene-derived structure is in a range of 10:90 to 50:50.

**4.** The pre-dispersant composition of claim 2, wherein the hydrogenated nitrile-butadiene rubber further comprises a repeating unit of a butadiene-derived structure represented by Formula 4 or Formula 5.

[Formula 4]

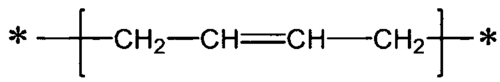

[Formula 5]

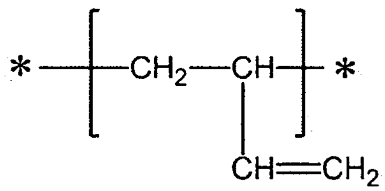

**5.** The pre-dispersant composition of claim 1, wherein the amide-based dispersion medium comprises at least one selected from the group consisting of dimethylformamide (DMF), diethylformamide, dimethylacetamide (DMAc), and N-methylpyrrolidone (NMP).

**6.** The pre-dispersant composition of claim 1, wherein the viscosity of the pre-dispersant composition is in a range of 200 cPs to 3,000 cPs, measured by Brookfield viscometer, at 25°C.

7. The pre-dispersant composition of claim 1, wherein the moisture content of the pre-dispersant composition is 0.3 wt% or less.

8. An electrode slurry composition comprising an electrode active material, a conductive agent, a binder, a solvent, and the pre-dispersant composition of claim 1.

9. An electrode for a secondary battery, the electrode prepared by using the electrode slurry composition of claim 8.

10. The electrode for a secondary battery of claim 9, wherein the electrode is a positive electrode.

11. A lithium secondary battery comprising a positive electrode; a negative electrode; a separator; and an electrolyte, wherein at least one of the positive electrode and the negative electrode is the electrode of claim 9.

## Patentansprüche

1. Vordispergiermittelzusammensetzung, umfassend einen hydrierten Nitril-Butadien-Kautschuk, ein Amidbasiertes Dispersionsmedium und ein metallisches Element oder ein halbmetallisches Element,

   wobei die Viskosität der Vordispergiermittelzusammensetzung in einem Bereich von 70 cPs bis 3.000 cPs liegt, gemessen mit einem Brookfield-Viskosimeter bei 25 °C, und der Feuchtigkeitsgehalt der Vordispergiermittelzusammensetzung 0,9 Gew.-% oder weniger beträgt,
   wobei der Feststoffgehalt in der Vordispergiermittelzusammensetzung in einem Bereich von 4 Gew.-% bis 11 Gew.-% liegt, bezogen auf das Gesamtgewicht der Vordispergiermittelzusammensetzung,
   wobei das metallische Element oder das halbmetallische Element mindestens eines ist, das aus Aluminium (Al), Calcium (Ca) und Silicium (Si) ausgewählt ist, wobei das metallische Element oder das halbmetallische Element eine Konzentration von 150 ppm oder weniger aufweist.

2. Vordispergiermittelzusammensetzung nach Anspruch 1, wobei der hydrierte Nitril-Butadien-Kautschuk umfasst:

   eine Wiederholungseinheit einer von Acrylnitril abgeleiteten Struktur, dargestellt durch Formel 1; und
   eine Wiederholungseinheit, die mindestens eine der Wiederholungseinheiten von von hydriertem Butadien abgeleiteten Strukturen, dargestellt durch Formeln 2 und 3, einschließt

[Formula 1]

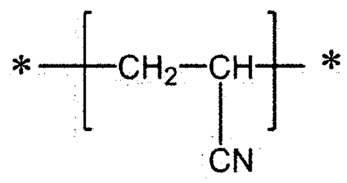

[Formula 2]

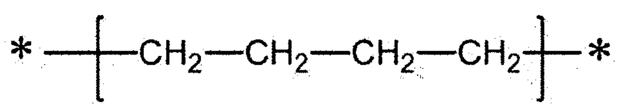

[Formula 3]

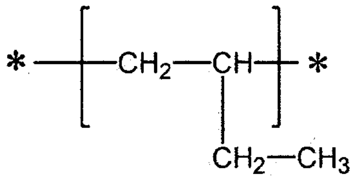

3. Vordispergiermittelzusammensetzung nach Anspruch 2, wobei das Gewichtsverhältnis der Wiederholungseinheit der von Acrylnitril abgeleiteten Struktur : der Wiederholungseinheit der von hydriertem Butadien abgeleiteten Struktur in einem Bereich von 10:90 bis 50:50 liegt.

4. Vordispergiermittelzusammensetzung nach Anspruch 2, wobei der hydrierte Nitril-Butadien-Kautschuk ferner eine Wiederholungseinheit einer von Butadien abgeleiteten Struktur, dargestellt durch Formel 4 oder Formel 5, umfasst.

[Formula 4]

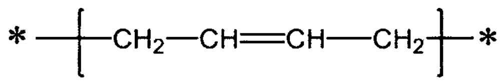

[Formula 5]

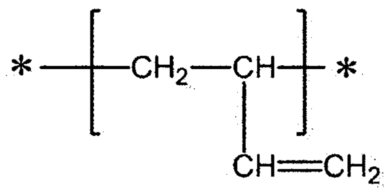

5. Vordispergiermittelzusammensetzung nach Anspruch 1, wobei das Amidbasierte Dispersionsmedium mindestens eines, ausgewählt aus der Gruppe, bestehend aus Dimethylformamid (DMF), Diethylformamid, Dimethylacetamid (DMAc) und N-Methylpyrrolidon (NMP), umfasst.

6. Vordispergiermittelzusammensetzung nach Anspruch 1, wobei die Viskosität der Vordispergiermittelzusammensetzung in einem Bereich von 200 cPs bis 3.000 cPs liegt, gemessen mit einem Brookfield-Viskosimeter bei 25 °C.

7. Vordispergiermittelzusammensetzung nach Anspruch 1, wobei der Feuchtigkeitsgehalt der Vordispergiermittelzusammensetzung 0,3 Gew.-% oder weniger beträgt.

8. Elektrodenaufschlämmungszusammensetzung, umfassend ein aktives Elektrodenmaterial, ein leitfähiges Mittel, ein Bindemittel, ein Lösungsmittel und die Vordispergiermittelzusammensetzung nach Anspruch 1.

9. Elektrode für eine Sekundärbatterie, wobei die Elektrode unter Verwendung der Elektrodenaufschlämmungszusammensetzung nach Anspruch 8 hergestellt ist.

10. Elektrode für eine Sekundärbatterie nach Anspruch 9, wobei die Elektrode eine positive Elektrode ist.

11. Lithium-Sekundärbatterie, umfassend eine positive Elektrode; eine negative Elektrode; einen Separator; und einen Elektrolyten, wobei mindestens eine der positiven Elektrode und der negativen Elektrode die Elektrode nach Anspruch 9 ist.

## Revendications

1. Composition d'agent de pré-dispersion comprenant un caoutchouc de nitrile-butadiène hydrogéné, un milieu de

dispersion à base d'amide et un élément métallique ou un élément semi-métallique,

dans laquelle la viscosité de la composition d'agent de pré-dispersion est dans une plage de 70 cPs à 3000 cPs, mesurée par un viscosimètre Brookfield, à une t de 25°C, et une teneur en humidité de la composition d'agent de pré-dispersion est 0,9 % en poids ou moins,
dans laquelle une teneur en solides dans la composition d'agent de pré-dispersion est dans une plage de 4 % en poids à 11 % en poids, sur la base d'un poids total de la composition d'agent de pré-dispersion,
dans laquelle l'élément métallique ou l'élément semi-métallique est un ou plusieurs éléments sélectionnés parmi l'aluminium (Al), le calcium (Ca) et le silicium (Si), dans laquelle l'élément métallique ou l'élément semi-métallique a une concentration de 150 ppm ou moins.

**2.** Composition d'agent de pré-dispersion selon la revendication 1, dans laquelle le caoutchouc de nitrile-butadiène hydrogéné comprend :

une unité de répétition d'une structure dérivée de l'acrylonitrile représentée par la Formule 1 ; et
une unité de répétition incluant au moins une des unités de répétition de structure dérivée du butadiène hydrogéné représentée par les Formules 2 et 3.

[Formula 1]

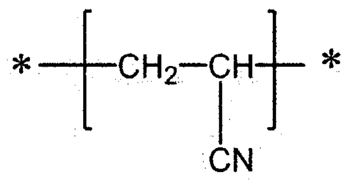

[Formula 2]

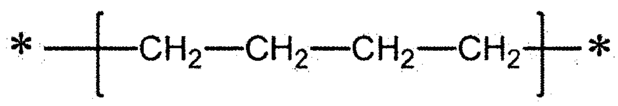

[Formula 3]

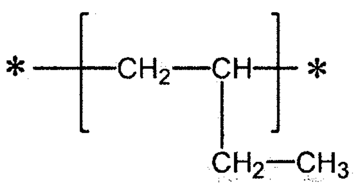

**3.** Composition d'agent de pré-dispersion selon la revendication 2, dans laquelle un rapport en poids de l'unité de répétition de la structure dérivée de l'acrylonitrile : l'unité de répétition de la structure dérivée du butadiène hydrogéné est dans une plage de 10:90 à 50:50.

**4.** Composition d'agent de pré-dispersion selon la revendication 2, dans laquelle le caoutchouc de nitrile-butadiène hydrogéné comprend en outre une unité de répétition d'une structure dérivée du butadiène représentée par la Formule 4 ou la Formule 5.

[Formula 4]

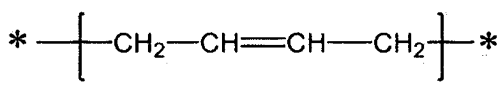

[Formula 5]

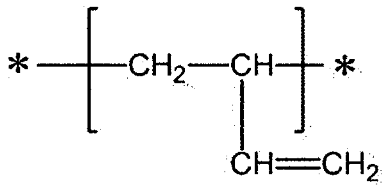

**5.** Composition d'agent de pré-dispersion selon la revendication 1, dans laquelle le milieu de dispersion à base d'amide comprend un ou plusieurs éléments sélectionnés dans le groupe constitué de diméthylformamide (DMF), diéthylformamide, diméthylacétamide (DMAc) et N-méthylpyrrolidone (NMP).

**6.** Composition d'agent de pré-dispersion selon la revendication 1, dans laquelle la viscosité de la composition d'agent de pré-dispersion est dans une plage de 200 cPs à 3000 cPs, mesurée par un viscosimètre Brookfield, à 25°C.

**7.** Composition d'agent de pré-dispersion selon la revendication 1, dans laquelle la teneur en humidité de la composition d'agent de pré-dispersion est 0,3 % en poids ou moins.

**8.** Composition de suspension pour électrode comprenant un matériau actif d'électrode, un agent conducteur, un liant, un solvant et la composition d'agent de pré-dispersion selon la revendication 1.

**9.** Électrode pour une batterie rechargeable, l'électrode étant préparée en utilisant la composition de suspension pour électrode selon la revendication 8.

**10.** Électrode pour une batterie rechargeable selon la revendication 9, dans laquelle l'électrode est une électrode positive.

**11.** Batterie rechargeable au lithium comprenant une électrode positive ; une électrode négative ; un séparateur ; et un électrolyte, dans laquelle soit l'électrode positive, soit l'électrode négative est l'électrode selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20150016852 A
- KR 20170085976 A


### Non-patent literature cited in the description


- **N.A. MOHAMMADI** ; **G.L. REMPEL**. *Macromolecules*, 1987, vol. 20, 2362